# EUROPÄISCHE PATENTSCHRIFT

(11) **EP 1 954 523 B1**
(45) Veröffentlichungstag und Bekanntmachung des Hinweises auf die Patenterteilung: **30.06.2010**
(21) Anmeldenummer: 06829184.8
(22) Anmeldetag: 29.11.2006
(51) Int. Cl.: B60N 2/28

(54) **DREHBARER KINDERSITZ FÜR KRAFTFAHRZEUGE**
ROTATABLE CHILD SEAT FOR MOTOR VEHICLES
SIÈGE ENFANT ROTATIF POUR VÉHICULES AUTOMOBILES

(30) Priorität: 30.11.2005 DE 102005057124; 04.07.2006 DE 102006030887; 26.07.2006 DE 102006034557
(43) Veröffentlichungstag der Anmeldung: 13.08.2008
(73) Patentinhaber: CYBEX Industrial Ltd., Causeway Bay Hong Kong (CN)
(72) Erfinder: POS, Martin, 95445 Bayreuth (DE)
(74) Vertreter: Popp, Eugen
(86) Internationale Anmeldenummer: PCT/EP2006/011462
(87) Internationale Veröffentlichungsnummer: WO 2007/062828

(56) Entgegenhaltungen:
- EP-A- 1 145 898
- EP-A1- 0 853 018
- AU-B2- 776 444

## Beschreibung

Die Erfindung betrifft einen drehbaren Kindersitz für Kraftfahrzeuge mit einem Grundgestell, welches einen im Wesentlichen vertikal verlaufenden Rückenbereich und einen im Wesentlichen horizontal verlaufenden Bodenbereich aufweist, wobei das Grundgestell ausgelegt ist, auf einem Fahrzeugsitz angeordnet und dort mit einem fahrzeuginternen Sicherheitsgurtsystem gehalten zu werden, und mit einem Sitzschalensystem, welches eine Sitzschale und ein an der Unterseite des Sitzschalensystems vorgesehenes Verbindungselement aufweist, wobei das Verbindungselement mit einem entsprechend komplementär hierzu ausgebildeten und am Bodenbereich des Grundgestells vorgesehenen Verbindungselement derart in Eingriff bringbar ist, daß zwischen dem Grundgestell und der Sitzschale eine kraftschlüssige Verbindung gebildet wird, wobei das Sitzschalensystem um eine mit den Verbindungselementen gebildete und im Wesentlichen vertikale Drehachse relativ zum Grundgestell zwischen einer ersten Position, in welcher die Sitzschale in Fahrtrichtung zeigt, und einer zweiten Position, in welcher die Sitzschale entgegen der Fahrtrichtung zeigt, verdrehbar oder umstellbar ist.

Ein derartiger drehbarer Kindersitz ist allgemein bekannt. In der Regel ist hierbei vorgesehen, daß das Grundgestell mittels der in den Kraftfahrzeugen vorhandenen Sicherheitsgurten auf dem Rück- oder Vordersitz eines Kraftfahrzeuges fixiert wird. Hierfür gibt es die unterschiedlichsten Konstruktionen, wobei diesbezüglich nur beispielhaft auf die Druckschrift DE 43 28 635 C2 verwiesen wird.

Bei der vorliegenden Erfindung geht es vorrangig darum, einen derartigen Kindersitz dahingehend zu optimieren, um ein Abbrechen des insbesondere in der zweiten Position ausgerichteten Sitzschalensystems vom Grundgestell in wirkungsvoller Weise zu verhindern. Insbesondere geht es hier also allgemein um die erhöhte Sicherheit für ein in einem Kindersitz angeschnalltes Kind. Andererseits soll ein System angegeben werden, bei dem eine Fehlbedienung, beispielsweise bei der Montage oder dem Einstellendes Sitzschalensystems, nahezu ausgeschlossen werden kann.

In diesem Zusammenhang gibt es Kindersitze, die insgesamt aus einer in Fahrtrichtung zeigenden Position in eine entgegengesetzt der Fahrtrichtung zeigende Position und umgekehrt drehbar sind. Dabei handelt es sich jedoch in der Regel um relativ aufwendige Konstruktionen, die auch ein entsprechend hohes Gewicht aufweisen. Beilspielsweise ist in der Druckschrift EP 1 145 898 A1 eine Kindersitzanordnung offenbart, bei welcher ein Sitzschalensystem entweder in einer in Fahrtrichtung zeigenden Position oder in einer entgegengesetzt der Fahrtrichtung zeigenden Position angeordnet werden kann. Dabei ist vorgesehen, daß das Sitzschalensystem mit Hilfe der fahrzeuginternen Sicherheitsgurte gehalten wird. Bei dieser aus dem Stand der Technik bekannten Lösung hat es sich allerdings als nachteilig erwiesen, daß in der Position, in welcher die Sitzschale entgegengesetzt der Fahrtrichtung zeigt, die Sicherheitsgurte des Fahrzeuges in Kopfhöhe des Kindes entlanglaufen. In diesem Fall ist es insbesondere bei kleineren Kraftfahrzeugen nur mit Umständen möglich, beispielsweise am Ende der Fahrt das Kind wieder aus dem Sitzschalensystem herauszunehmen. Des Weiteren ist das Fixieren des Sitzschalensystems mit dem fahrzeuginternen Sicherheitsgurtsystem nur mit größerem Aufwand möglich. Insbesondere kann bei dieser aus dem Stand der Technik bekannten Lösung nicht grundsätzlich sichergestellt werden, daß das fahrzeuginterne Sicherheitsgurtsystem die richtige Vorspannung aufweist, um das Sitzschalensystem optimal relativ zu dem Grundgestell zu fixieren. Die Druckschrift AU 2001 29 821 B offenbart einen drehbaren kinder site nach dem Oberbegriff des Anspruchs 1. Demnach liegt der vorliegenden Erfindung die Aufgabe zugrunde, das eingangs genannte Kindersitzsystem derart weiter zu entwickeln, daß die Montage und das Einstellen des Sitzschalensystems vereinfacht wird, wobei gleichzeitig das zu sichernde Kind mit nur wenigen Handgriffen in den Kindersitz gesetzt und wieder entnommen werden kann, und wobei auch in der zweiten Position des Sitzschalensystems, in welcher die Sitzschale in Fahrtrichtung zeigt, das Sitzschalensystem insbesondere auch bei Extremsituationen, wie etwa im Falle eines Auffahrunfalls etc., kraftschlüssig mit dem Grundgestell verbunden bleibt und nicht abbricht oder abschert.

Diese Aufgabe wird gemäß der Erfindung mit einem Kindersitz mit den Merkmalen des Anspruchs 1 gelöst.

Gemäß einer bevorzugten Ausführungsvariante der Erfindung wird die zugrundeliegende Aufgabe mit einem Kindersitz der eingangs genannten Art dadurch gelöst, daß der Kindersitz ferner zumindest einen Verankerungsgurt aufweist, der zumindest mit einem Ende am Grundgestell und mit dem anderen Endes am Grundgestell oder am Sitzschalensystem befestigt ist, und wobei der Verankerungsgurt in der zweiten Position des Sitzschalensystems, in welcher die Sitzschale entgegen der Fahrtrichtung zeigt, im wesentlichen waagerecht verlaufend unter Zugspannung steht und somit ermöglicht, daß eine Gegenkraft zu zumindest einem Teil der an das Sitzschalensystem angreifenden und in Fahrtrichtung zeigenden Kräfte von dem Sitzschalensystem über den Verankerungsgurt auf das Grundgestell ableitet werden kann, so daß mit Hilfe des Verankerungsgurtes das Sitzschalensystem an dem Grundgestell gehalten wird.

Der Kern der vorliegenden Erfindung liegt also darin, daß erfindungsgemäß die Sitzschale nicht nur mit Hilfe der fahrzeuginternen Sicherheitsgurte, sondern auch über einen zum Kindersitz gehörigen Gurt zusätzlich zu der mit Hilfe des an der Unterseite des Sitzschalensystems vorgesehenen Verbindungselements und des komplementär hierzu ausgebildeten und am Bodenbereich des Grundgestells vorgesehenen Verbindungselements gebildeten kraftschlüssigen Verbindung festgehalten wird. Durch das Vorsehen des Verankerungsgurtes, ist in vorteilhafter Weise grundsätzlich die optimale Verankerung des Sitzschalensystems hinsichtlich des Grundgestells gewährleistet. Mit dem Vorsehen von Führungsmitteln, die den Verankerungsgurt unabhängig von der Drehposition des Sitzschalensystems relativ zum Grundgestell derart über einen vorgegebenen ersten Führungsbereich an der Rückseite des Sitzschalensystems führen, daß der Verankerungsgurt stets um die im Wesentlichen vertikal verlaufende Drehachse des Sitzschalensystems verläuft und daß ferner beim Drehen des Sitzschalensystems von der ersten Position zu der zweiten Position und umgekehrt der Verankerungsgurt zumindest teilweise zwischen dem Sitzschalensystem und dem Grundgestell verläuft, wird des weiteren in vorteilhafter Weise erreicht, daß einerseits die Drehbarkeit des Sitzschalensystems relativ zum Grundgestell nicht beeinflusst wird, und daß andererseits eine hinreichende Befestigung des Sitzschalensystems am Grundgestell und somit über das fahrzeuginterne Sicherheitsgurtsystem auch am Fahrzeuggestell gewährleistet ist.

Bei der Erfindung wird insbesondere durch das Vorsehen eines vorgegebenen ersten Führungsbereiches an der Rückseite des Sitzschalensystems, der unabhängig von der Drehstellung des Sitzschalensystems relativ zum Grundgestell an einer festgelegten Position an der Rückseite des Sitzschalensystems vorgesehen ist, infolge der vorab festgelegten Länge des Verankerungsgurtes eine optimale Kraftübertragung zwischen dem Sitzschalensystem und dem Grundgestell über den Verankerungsgurt sichergestellt, insbesondere unabhängig von der jeweiligen Drehstellung des Sitzschalensystems. Andererseits garantiert der vorgegebene (erste) Führungsbereich an der Rückseite des Sitzschalensystems stets eine leichtgängige Führung des Verankerungsgurtes. Im Einzelnen findet bei der Drehung des Sitzschalensystems um die im Wesentlichen vertikal verlaufende Drehachse zwischen dem Verankerungsgurt und dem Sitzschalensystem eine relative Bewegung statt. Mit dem vorgegebenen Führungsbereich an der Rückseite des Sitzschalensystems wird sichergestellt, daß diese relative Bewegung in einem vorsehbaren Ablauf stattfindet. Insbesondere kann hiermit wirkungsvoll verhindert werden, daß der Verankerungsgurt beispielsweise zwischen dem Sitzschalensystem und dem Grundgestell eingeklemmt oder andersartig blockiert wird.

Gleichzeitig wird der Verankerungsgurt unabhängig von der Drehstellung des Sitzschalensystems vorzugsweise so geführt, daß dieser nicht beispielsweise in Kopfhöhe des Kindes verläuft, sondern am unteren Bereich der Sitzschale, um somit das Einsetzen des Kindes in das Sitzschalensystem bzw. die Sitzschale zu vereinfachen. Für die Befestigung der jeweiligen Enden des Verankerungsgurtes am Grundgestell können herkömmliche Bolzenverbindungen verwendet werden. Allerdings sind hier auch andere Ausführungen denkbar.

Bei der oben genannten bevorgzugten Ausführungsvariente der Erfindung ist vorgesehen, daß der Kindersitz einen Verankerungsgurt aufweist, welcher in der zweiten Position der Sitzschale, bei welcher die Sitzschale entgegen der Fahrtrichtung zeigt, im wesentlichen waagerecht verlaufend zwischen dem Sitzschalensystem und dem Grundgestell gespannt ist, um einen zusätzlichen Halt des Sitzschalensystems am Grundgestell zu ermöglichen. Hinsichtlich der Auslegung und der Eigenschaften des Verankerungsgurtes bei dem zweiten Aspekt der Erfindung gilt das im Zusammenhang mit dem ersten Aspekt Gesagte. Insbesondere ist das eine Ende des Verankerungsgurtes am Grundgestell, vorzugsweise am oberen Bereich des Grundgestells, und das andere Endes des Verankerungsgurtes am Grundgestell oder am Sitzschalensystem befestigt.

Für die Erfindung gilt, daß je nach Auslegung des Kindersitzes der Verankerungsgurt mit seinen beiden Enden jeweils am unteren Ende oder am oberen Ende des im Wesentlichen vertikal verlaufenden Rückenbereich des Grundgestells befestigt sein kann. Alternativ hierzu wäre es bei dem zweiten Aspekt der Erfindung auch denkbar, daß der Verankerungsgurt mit einem seiner Enden am unteren Ende oder am oberen Ende des im Wesentlichen vertikal verlaufenden Rückenbereich des Grundgestells befestigt ist, während das andere Ende vorzugsweise mit dem Kopfbereich der Sitzschale befestigt ist.

Vorteilhafte Weiterentwicklungen der beiden Aspekte der Erfindung sind in den Unteransprüchen angegeben.

Um zu erreichen, daß bei der Montage und bei dem Einstellen des Kindersitzes vom Benutzer nur möglichst wenige Handgriffe notwendig werden, ist in einer bevorzugten Weiterentwicklung vorgesehen, daß der Verankerungsgurt eine vorab festgelegte Länge aufweist.

Andererseits wäre es auch denkbar, daß der Kindersitz vorzugsweise am Seiten- oder Rückenbereich des Sitzschalensystems ferner zumindest ein manuell betätigbares Spannmittel zum Verändern der Länge des Verankerungsgurts aufweist, was das Drehen des Kindersitzes erleichtert, da beispielsweise bei der Ausführung gemäß dem ersten Aspekt der Erfindung der Verankerungsgurt in seinem gelockerten Zustand nur wenig an dem Sitzschalensystem reibt. Mit dem Vorsehen des Spannmittels kann anschließend der Verankerungsgurt angezogen und entsprechend gespannt werden.

Gemäß der Erfindung ist ferner vorgesehen, daß der vorgegebene erste Führungsbereich an der Rückseite des Sitzschalensystems ein an dem Sitzschalensystem angeordnetes, führungsglied aufweist, das ein Hülsenelement aufweist, über bzw. durch welzusätzlich zu den Hülsenelement eine Ose oder ein ösenähnliches Element aufweist, durch welches der Verankerungsgurt geführt wird. Unter dem hierin verwendeten Begriff "Öse" bzw. "ösenähnliches Element" ist ein ringförmiger oder langlochförmiger Durchgang zu verstehen, durch welchen der Verankerungsgurt läuft. Die Formgebung des Durchganges, durch den der Verankerungsgurt läuft, kann dabei auch an die Querschnittsgeometrie des Verankerungsgurtes entsprechend angepasst sein, um somit eine möglichst optimale Führung des Verankerungsgurtes durch das Führungsglied zu ermöglichen.

In vorteilhafter Weise handelt es sich bei diesem Hülsenelement um eine drehbar gelagerte Hülse, insbesondere eine Hotizontalhülse. Selbstverständlich sind aber auch andere Ausführungsformen des Führungsgliedes denkbar.

Das Führungsglied ist bevorzugt an oder integral mit der Rückseite des Sitzschalensystems ausgebildet. Denkbar hierbei wäre beispielsweise, die Rückseite des Sitzschalensystems so zu konstruieren, daß das Führungsglied bereits konstruktionsbedingt am ersten Führungsbereich der Rückseite des Sitzschalensystems vorliegt. Denkbar hierbei wäre es beispielsweise, an der Rückseite des Sitzschalensystems konstruktionsbedingte Verstrebungen als Führungsglieder zu verwenden. Selbstverständlich ist es aber auch möglich, daß der an der Rückseite des Sitzschalensystems vorgegebene erste Führungsbereich durch eine entsprechend gewählte Formgebung der Rückseite des Sitzschalensystems begründet wird.

Um zu erreichen, daß der Verankerungsgurt bei der Führung über das als Hülsenelement ausgebildete Führungsglied an der Rückseite des Sitzschalensystems einen optimalen Halt des Sitzschalensystems am Grundgestell bei gleichzeitiger möglichst leichtgängiger Führung bereitstellt, ist in einer bevorzugten Realisierung der zuletzt genannten Ausführungsform des erfindungsgemäßen Kindersitzes vorgesehen, daß das als Führungsglied dienende Hülsenelement derart ausgebildet ist, daß der Verankerungsgurt bei der Führung über die Hülse um etwa 180° gedreht wird. Anders ausgedrückt bedeutet dies, daß der Verankerungsgurt derart über das Hülsenelement geführt wird, daß der Verankerungsgurt das Hülsenelement zumindest teilweise umschlingt.

Um zu erreichen, daß der Verankerungsgurt unabhängig von der Drehstellung des Sitzschalensystems stets durch den an der Rückseite des Sitzschalensystems vorgesehenen ersten Führungsbereich läuft und daß ferner der Verankerungsgurt stets beim. Drehen des Sitzschalensystems von der ersten Position zu der zweiten Position und umgekehrt zumindest teilweise zwischen dem Sitzschalensystem und dem Grundgestell verläuft, ist in bevorzugter Weise vorgesehen, daß die Führungsmittel ferner zumindest eine Führungsöse oder einen ösenähnliches Führungselement aufweisen, die bzw. das mit dem Sitzschalensystem fest verbunden ist. Wie bereits zuvor angedeutet, ist der Begriff "Öse" bzw. "ösenähnliches Element" hierin weit auszulegen. Insbesondere kommt hier auch eine klammer- bzw. spangenähnliche Konstruktion in Frage. Durch das Vorsehen dieser zusätzlichen Führungsmittel kann grundsätzlich sichergestellt werden, daß beim Drehen des Sitzschalensystems relativ zum Grundgestell der Verankerongsgurt in einem vorhersagbaren Ablauf geführt wird.

Im Hinblick auf den Verlauf des Verankerungsgurtes zwischen dem Sitzschalensystem und dem Grundgestell bei einer Verdrehung des Sitzschalensystems relativ zum Grundgestell ist vorteilhafter Weise vorgesehen, daß die Führungsmittel - zusätzlich zu dem vorgegebenen ersten Führungsbereich an der Rückseite des Sitzschalensystems- einen weiteren, zweiten Führungsbereich aufweisen, welcher sich zwischen dem Sitzschalensystem und dem Grundgestell erstreckt, und in welchem der Verankerungsgurt bei der Drehung des Sitzschalensystems von der ersten Position zu der zweiten Position und umgekehrt geführt wird. Bei diesem zweiten Führungsbereich handelt es sich insbesondere nicht um ein fest positioniertes Führungsglied oder eine entsprechende Führungsschiene, vielmehr ist der zweite Führungsbereich tatsächlich als ein Bereich zwischen dem Sitzschalensystem und dem Grundgestell ausgebildet, in welchem der Verankerungsgurt bei der Drehung des Sitzschalensystems relativ zum Grundgestell freilaufen kann.

Der zweite Führungsbereich wird dabei vorzugsweise durch die äußere Peripherie der Sitzschale begrenzt, wobei hier in vorteilhafter Weise die Sitzschale als schalenförmiges Formteil ausgebildet ist.

In einer bevorzugten Weiterentwicklung des Kindersitzes kann ferner vorgesehen sein, daß das Sitzschalensystem einen zwischen der Sitzschale, und dem Grundgestell angeordneten Zwischenrahmen aufweist, in den die Sitzschale setzbar und an dem die Sitzschale mit entsprechend vorgesehenen Verankerungsmitteln vorzugsweise lösbar befestigt werden kann. In diesem Fall wird der zweite Führungsbereich im Wesentlichen entlang der Peripherie dieses Zwischenrahmens bestimmt. Grundsätzlich kann der zweite Führungsbereich und somit der Führungsablauf des Verankerungsgurtes zwischen dem Sitzschalensystem und dem Grundgestell durch eine entsprechend gewählte Formgebung der äußeren Peripherie der Sitzschale bzw. des Zwischenrahmens beeinflusst werden. Mit dem Vorsehen des Zwischenrahmens zwischen der Sitzschale und dem Grundgestell kann erreicht werden, daß die Sitzschale in verschiedenen einstellbaren Liege- und Sitzpositionen in dem Sitzschalensystem befestigt werden kann. Selbstverständlich sind hierfür aber auch andere Lösungen denkbar.

Um zu erreichen, daß die Sitzschale als solche aus der Kindersitzanordnung herausgenommen werden kann, ist einer vorteilhaften Weiterentwicklung vorgesehen, daß das an der Unterseite des Sitzschalensystems vorgesehene Verbindungselement und das komplementär hierzu ausgebildete und am Bodenbereich des Grundgestells vorgesehene Verbindungselement jeweils derart ausgeführt, sind, daß zwischen dem Grundgestell und dem Sitzschalensystem eine lösbare Verbindung gebildet wird. Das Lösen der Verbindung erfolgt vorzugsweise durch Betätigung eines entsprechend ausgebildeten und hierzu vorgesehenen Betätigungsmittels. Denkbar wäre hierbei als Verbindungselemente lösbare Rastglieder zu verwenden. Selbstverständlich sind aber auch andere Ausführungsformen möglich.

Um zu erreichen, daß die Sitzschale bzw. das Sitzschalensystem relativ zum Grundgestell arretiert werden kann, ist in einer weiteren bevorzugten Weiterentwicklung vorgesehen, daß das Sitzschalensystem ferner entsprechende Arretierungsmittel aufweist, welche mit dem Sitzschalensystem einerseits und mit dem Grundgestell andererseits derart zusammenwirken, daß bei Betätigung der Arretierungsmittel eine Drehbewegung des Sitzschalensystems relativ zum Grundgestell verhindert wird. Denkbar hierbei wäre beispielsweise, daß die mit dem an der Unterseite der Sitzschale vorgesehene Verbindungselement und dem entsprechend komplementär hierzu ausgebildeten und am Bodenbereich des Grundgestells vorgesehenen Verbindungselement ausgebildete kraftschlüssige Verbindung zwischen dem Grundgestell und dem Sitzschalensystem durch ein entsprechend vorgesehenes Arretierungsmittel verdrehsicher ausgebildet wird. Geeignete Arretierungsmittel sind aus dem Stand der Technik bekannt und werden hierin nicht näher erläutert.

Schließlich ist für das Grundgestell in einer bevorzugten Realisierung des erfindungsgemäßen Kindersitzes vorgesehen, daß dieses ein schalenförmiges Formteil und/oder einen Rahmen aufweist. Selbstverständlich sind hier aber auch andere Ausführungsformen denkbar.

Nachstehend wird eine bevorzugte Ausführungsform des erfindungsgemäßen Kindersitzes anhand der beigefügten Zeichnungen näher erläutert.

Es zeigen:
- Fig. 1:: eine perspektivische, schematische Seitenansicht einer bevorzugten Ausfüh- rungsform des erfindungsgemäßen Kindersitzes in seiner zweiten Position, in welcher die Sitzschale entgegengesetzt der Fahrtrichtung zeigt;
- Fig. 2:: eine perspektivische Ansicht auf die Rückseite des Sitzschalensystems des schematisch dargestellten Kindersitzes gemäß Fig. 1;
- Fig. 3:: eine perspektivische Ansicht des in Fig. 1 gezeigten Kindersitzes, wobei der Kindersitz aus der in Fig. 1 gezeigten zweiten Position in Richtung der ers- ten Position, in welcher die Sitzschale in Fahrtrichtung zeigt, verschwenkt ist;
- Fig. 4:: eine schematische Ansicht des Kindersitzes gemäß Fig. 1, wobei das Sitz- schalensystem im Vergleich zur in Fig. 3 gezeigten Drehstellung noch wei- ter in Richtung erste Position verschwenkt ist;
- Fig. 5:: eine perspektivische Seitenansicht des Kindersitzes gemäß Fig. 1 in seiner ersten Position, in welcher die Sitzschale in die Fahrtrichtung des Fahrzeu- ges zeigt; und
- Fig. 6:: eine Draufsicht auf den ersten Führungsbereich der bevorzugten Ausfüh- rungsform des erfindungsgemäßen Kindersitzes.

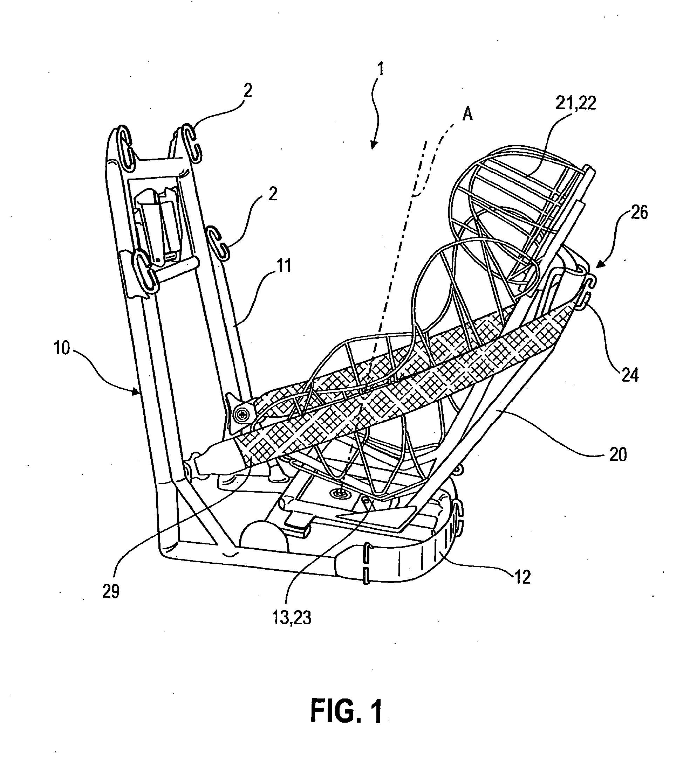

In Fig. 1 ist eine bevorzugte Ausführungsform des erfindungsgemäßen Kindersitzes 1 in seiner zweiten Position dargestellt, bei welcher das Sitzschalensystem 20 entgegengesetzt des (nicht explizit dargestellten) Fahrzeuges zeigt. Der Kindersitz 1 besteht aus einem Grundgestell 10, das in der dargestellten bevorzugten Ausführungsform als Rahmenteil ausgebildet ist; denkbar hierbei wäre allerdings auch, daß das Grundgestell 10 in Gestalt einen schalenförmigen Formteils realisiert ist.

Das Grundgestell 10 weist einen im Wesentlichen vertikal verlaufenden Rückenbereich 11 und einen im Wesentlichen horizontal verlaufenden Bodenbereich 12 auf und ist ausgelegt, auf einem (nicht explizit dargestellten) Fahrzeugsitz angeordnet und dort mit einem fahrzeuginternen Sicherheitsgurtsystem gehalten zu werden. Hierfür sind am Grundgestell 10 entsprechende Gurtführungen 2 vorgesehen. Die Befestigung des Grundgestells 10 auf einem Fahrzeugsitz erfolgt in einer aus dem Stand der Technik bekannten Art und Weise und wird hierin nicht näher erläutert.

Der erfindungsgemäße Kindersitz 1 weist - wie bereits angedeutet - das Sitzschalensystem 20 auf, welches in den Figuren als entsprechend geformter Gitterkörper dargestellt ist. Das Sitzschalensystem 20 weist im Wesentlichen eine Sitzschale 21, in die das Kind bzw. das Baby während der Fahrt gesetzt und angeschnallt wird, und ein an der Unterseite des Sitzschalensystems 20 vorgesehenes Verbindungselement 23 auf. Im zusammengebauten Zustand greift dieses Verbindungselement 23 mit einem entsprechend komplementär hierzu ausgebildeten und am Bodenbereich 12 des Grundgestells 10 vorgesehenen Verbindungselement 13 ein, so daß zwischen Grundgestell 10 und dem Sitzschalensystem 20 eine kraftschlüssige Verbindung gebildet wird, wobei gleichzeitig das Sitzschalensystem 20 um eine mit den Verbindungselementen 13 und 23 gebildete und im Wesentlichen vertikale Drehachse A relativ zum Grundgestell 10 verdrehbar oder umstellbar ist.

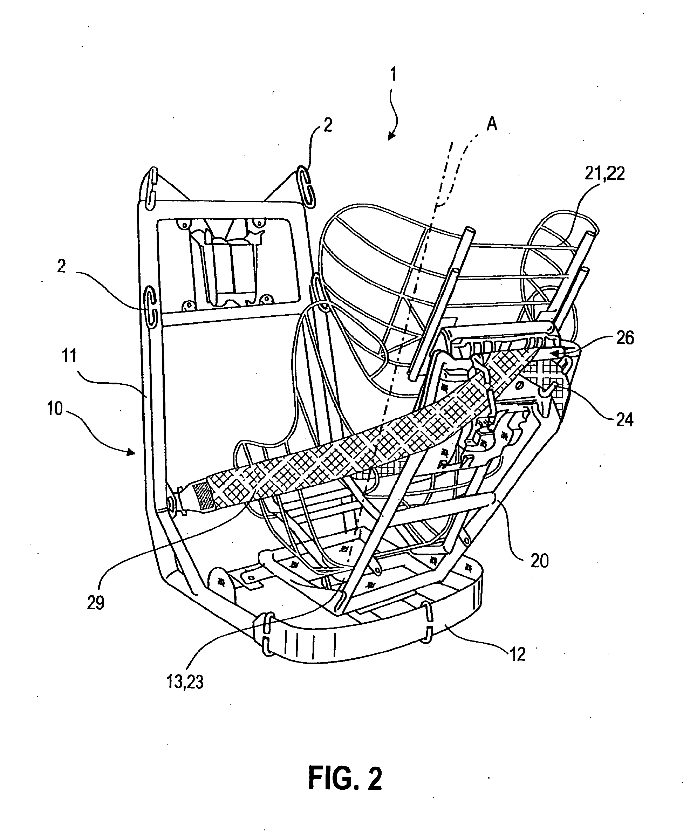

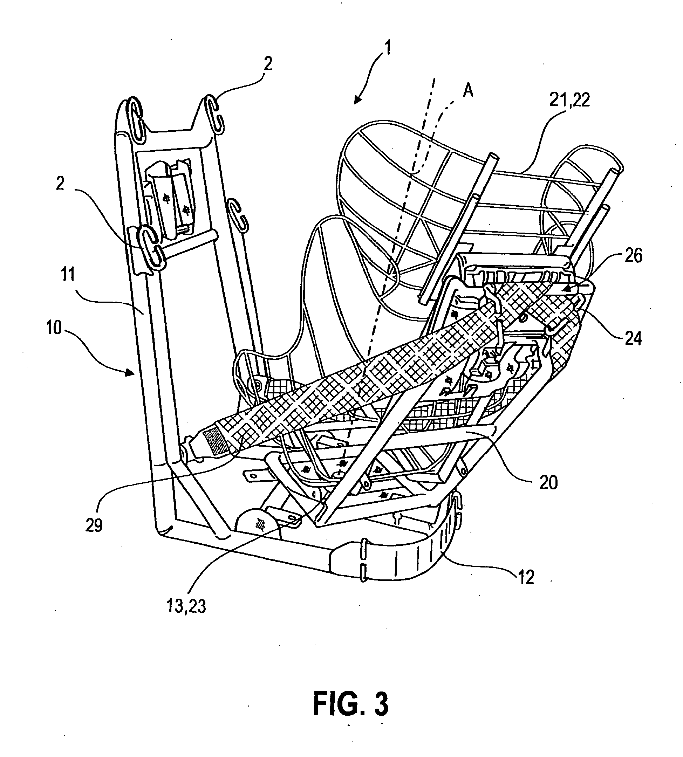

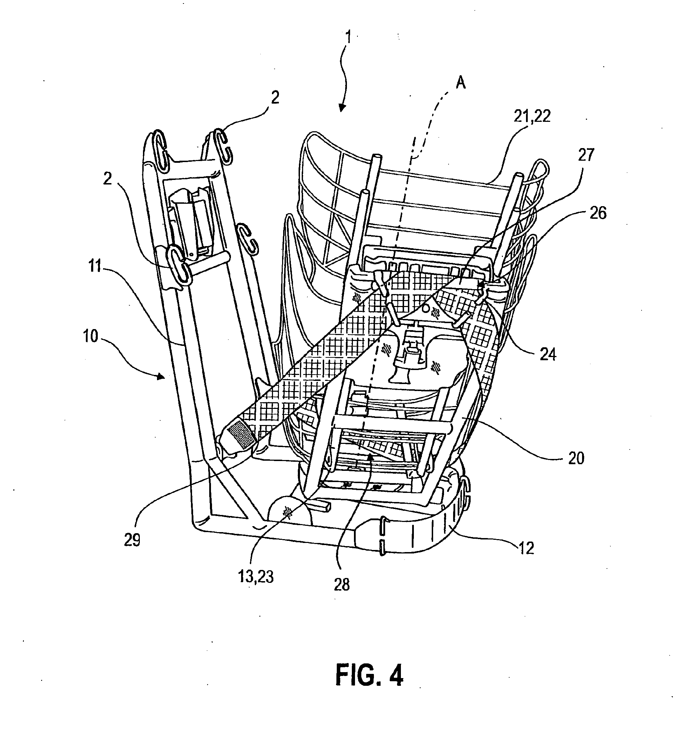

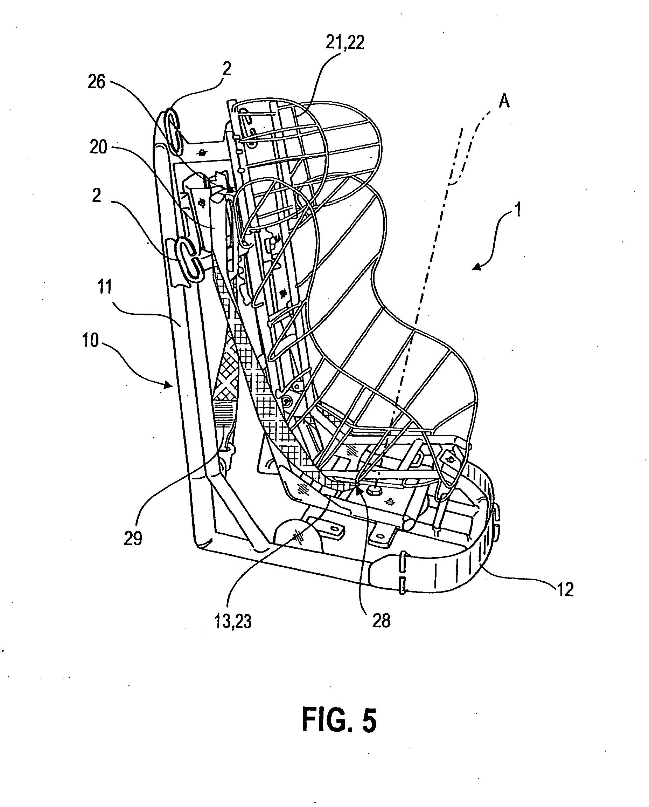

Die Figuren 1 bis 5 zeigen unterschiedliche Drehstellungen des Sitzschalensystems 20 relativ zum Grundgestell 10, und zwar beginnend mit der zweiten Position, in welcher die Sitzschale 21 entgegen der Fahrtrichtung des (nicht dargestellten) Fahrzeuges zeigt (siehe Fig. 1 und 2), über Zwischen-Drehstellungen in Fig. 3 und 4, bis zur ersten Position, in welcher die Sitzschale 21 in Fahrtrichtung zeigt (siehe Fig. 5). Obwohl in den Figuren die Verdrehung des Sitzschalensystems 20 im Uhrzeigersinn gezeigt wird, ist selbstverständlich aber auch eine Drehung entgegengesetzt des Uhrzeigersinns möglich.

Zwar wird mit den Verbindungselementen 13 und 23 zwischen dem Sitzschalensystem 20 und dem Grundgestell 10 eine kraftschlüssige Verbindung gebildet, diese Verbindung ist allerdings nicht hinreichend, um das Sitzschalensystem 20 mit dem gegebenenfalls darin eingesetzten Kind sicher an dem Grundgestell 10 zu halten, wenn beispielsweise in Folge von Bremsmanövern des Fahrzeuges größere Kräfte auf die Komponenten des Kindersitzes 1 einwirken. Aus diesem Grund weist der Kindersitz 1 ferner einen Verankerungsgurt 29 beispielsweise mit einer vorab festgelegten Länge auf, der mit seinen beiden Enden jeweils am Grundgestell 10 befestigt ist. In der dargestellten Ausführungsform erfolgt diese Befestigung mittels Bolzen. Des weiteren ist in den Figuren zu erkennen, daß der Verankerungsgurt 29 einem handelsüblichen Anschallgurt eines Fahrzeuges entsprechen kann.

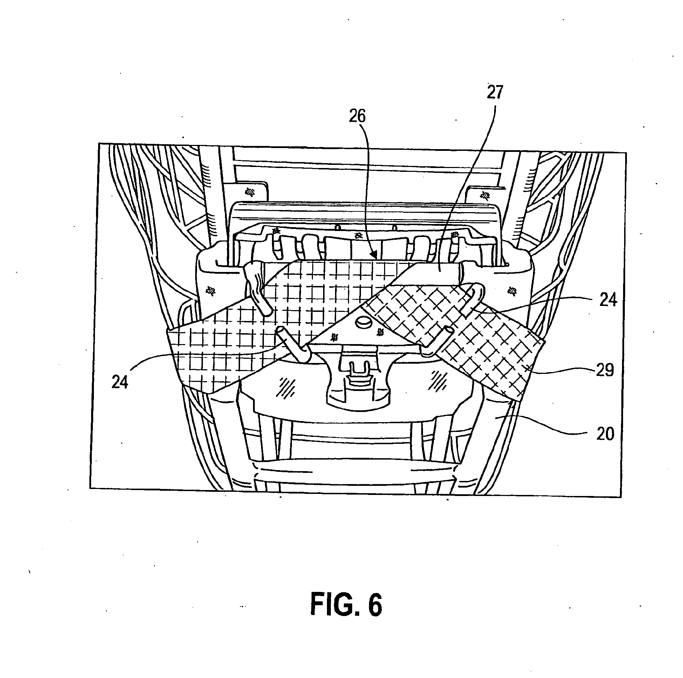

Der Verankerungsgurt 29 wird mit Hilfe von Führungsmitteln 24 um den in Fig. 1 in Fahrzeugrichtung zeigenden Bereich des Sitzschalensystems 20 geführt. Im einzelnen ist bei der erfindungsgemäßen Lösung vorgesehen, daß der Verankerungsgurt 29 mit den Führungsmitteln 24 unabhängig von der Drehposition des Sitzschalensystems 20 relativ zum Grundgestell 10 derart geführt wird, daß der Verankerungsgurt 29 stets über einen ersten vorgegebenen und an der Rückseite des Sitzschalensystems 20 angeordneten Führungsbereich 26 verläuft. Der erste Führungsbereich 26 ist detailliert in Fig. 6 dargestellt.

Des Weiteren wird der Verankerungsgurt 29 mit den Führungsmitteln 24 so geführt, daß der Gurt 29 - ebenfalls unabhängig von der Drehposition des Sitzschalensystems 20 relativ zum Grundgestell 10 - stets um die Drehachse A verläuft. Anders ausgedrückt bedeutet dies, daß der Verankerungsgurt 29 grundsätzlich relativ zur Fahrzeugrichtung vor der Drehachse A entlangläuft.

Der Verankerungsgurt 29 kann eine Länge aufweisen, die beispielsweise mit Hilfe eines Spannmittels verändert werden kann. Denkbar wäre es allerdings auch, daß der Verankerungsgurt 29 eine vorab festgelegte Länge aufweist, die auch bei der Montage des Kindersitzes 1 auf dem Fahrzeugsitz nicht verändert wird. Der Verankerungsgurt 29 übernimmt grundsätzlich die Funktion, das Sitzschalensystem 20 auf dem Bodenbereich 12 des Grundgestells 10 zu halten.

Die Führungsmittel 24 sind bei der bevorzugten Ausführungsform des Kindersitzes 1 in Gestalt von Führungsklammern ausgebildet, die fest an der Rückseite des Sitzschalensystems 20 geeignet angeordnet sind. Diese Führungsklammern werden hierin auch als "ösenähnliche Führungselemente" bezeichnet.

In den Figuren 3 und 4 ist die bevorzugte Ausführungsform des erfindungsgemäßen Kindersitzes 1 dargestellt, wobei hier die Drehstellung des Sitzschalensystems 20 verschieden von der in den Figuren 1 und 2 gezeigten zweiten Position ist, in welcher die Sitzschale 21 entgegen der Fahrtrichtung zeigt. In Fig. 5 ist der Kindersitz 1 in einer Drehstellung gezeigt, in welcher das Sitzschalensystems 20 in der ersten Position vorliegt, bei welcher die Sitzschale 21 in Fahrtrichtung zeigt. Sämtliche von der zweiten Position verschiedenen Drehstellungen haben gemeinsam, daß hier der Verankerungsgurt 29 zumindest teilweise zwischen dem Sitzschalensystem 20 und dem Grundgestell 10 verläuft. Dieser Bereich, in welchem der Verankerungsgurt beim Drehen des Sitzschalensystems 20 von der ersten Position zu der zweiten Position und umgekehrt zwischen dem Sitzschalensystem 20 und dem Grundgestell 10 verläuft, wird hierin als zweiter Führungsbereich 28 bezeichnet.

Der zweite Führungsbereich 28 wird im Wesentlichen durch die Außenperipherie des Sitzschalensystems 20 bzw. der Sitzschale 21 und der Außenperipherie des Bodenbereiches 12 des Grundgestells 10 bestimmt. Die Außenperipherie des Bodenbereiches 12 liegt dabei der Außenperipherie der Unterseite des Sitzschalensystems 20 gegenüber. Selbstverständlich ist aber im Hinblick auf den zweiten Führungsbereich 28 denkbar, daß auch hier Führungsmittel vorgesehen sind, die den Verlauf des Verankerungsgurtes 29 entsprechend beeinflussen.

Im Folgenden wird auf die technische Realisierung des an der Rückseite des Sitzschalensystems 20 angeordneten vorgegebenen ersten Führungsbereichs 26 näher eingegangen. Hierzu wird insbesondere Bezug auf Fig. 6 genommen. Wie dargestellt, weist der vorgegebene erste Führungsbereich 26 an der Rückseite des Sitzschalensystems 20 ein an dem Sitzschalensystem 20 angeordnetes Führungsglied 27 auf, welches in der dargestellten Ausführungsform eine drehbar gelagerte Horizontalhülse ist, über welche der Verankerungsgurt 29 geführt wird. Denkbar hierbei wäre aber auch, das Führungsglied 27 als eine Öse bzw. als ein ösenähnliches Element auszubilden.

Die drehbar gelagerte Horizontalhülse 27 ist vorzugsweise drehbar an der Rückseite des Sitzschalensystems 20 angeordnet, wobei der Verankerungsgurt 29 bei der Führung über die Hülse 27 eine 180°-Drehung verübt. Die geeignete Positionierung des Verankerungsgurtes 29 auf der Horizontalhülse 27 erfolgt über die entsprechenden Führungsmittel 24.

Um zu erreichen, daß eine Drehbewegung des Sitzschalensystems 20 relativ zum Grundgestell 10 verhindert wird, und daß eine bestimmte Drehstellung des Sitzschalensystems 20 fixiert werden kann, weist das Sitzschalensystem 20 ein als Klemmvorrichtung ausgebildetes Arretierungsmittel auf, das mit dem Verankerungsgurt 29, vorzugsweise am ersten Führungsbereich 26 in Eingriff bringbar ist, um zwischen dem Verankerungsgurt 29 und dem Sitzschalensystem 20 eine kraftschlüssige Klemmverbindung auszubilden. Damit kann erreicht werden, daß eine Drehbewegung der Sitzschale 21 relativ zum Grundgestell 10 verhindert wird. Selbstverständlich ist hier aber auch denkbar, daß ein betätigbares Arretierungsmittel am Sitzschalensystem 20 vorgesehen ist, welches mit der Sitzschale 21 einerseits und dem Grundgestell 10 andererseits derart zusammenwirkt, daß bei Betätigung des Arretierungsmittels eine Drehbewegung der Sitzschale 21 relativ zum Grundgestell 10 verhindert werden kann.

Obwohl nicht explizit dargestellt, ist der erfindungsgemäße Kindersitz 1 in vorteilhafter Weise derart ausgeführt, daß die Sitzschale 21 vom Grundgestell getrennt werden kann. Denkbar hierbei wäre, daß die Sitzschale 21 beispielsweise mit einer lösbaren Schnappverbindung mit dem Sitzschalensystem 20 verbunden ist, welches seinerseits an seiner Unterseite das Verbindungselement 23 aufweist, das in das komplementär hierzu ausgebildete und am Bodenbereich 12 des Grundgestells 10 vorgesehene Verbindungselement 13 in Eingriff bringbar ist.

Im bevorzugter Weise weist das Sitzschalensystem 20 des Kindersitzes 1 ferner einen Zwischenrahmen 22 auf, der zwischen der Sitzschale 21 und dem Grundgestell 10 angeordnet ist, und in den die Sitzschale 21 setzbar und an dem die Sitzschale 21 mit entsprechend vorgesehenen Verankerungsmitteln vorzugsweise lösbar befestigt werden kann. Der Zwischenrahmen 22 bzw. die Verankerungsmittel zwischen dem Zwischenrahmen 22 und der Sitzschale 21 sind dabei derart ausgeführt, daß die Sitzschale 21 in verschiedenen einstellbaren Liege- und Sitzpositionen in dem Sitzschalensystem 20 befestigt werden kann.

### Bezugszeichenliste

- 1: Kindersitz
- 2: Fahrzeugsitzgurtführung 10 Grundgestell
- 11: Rückengestell
- 12: Bodenbereich
- 13: Verbindungselement
- 20: Sitzschalensystem
- 21: Sitzschale
- 22: Zwischenrahmen
- 23: Verbindungselement
- 24: Führungsmittel
- 26: erster Führungsbereich
- 27: Führungsglied
- 28: zweiter Führungsbereich
- 29: Verankerungsgurt
- A: Drehachse

## Patentansprüche

1. Drehbarer Kindersitz (1) für Kraftfahrzeuge, mit
- einem Grundgestell (10), welches einen im Wesentlichen vertikal verlaufenden Rückenbereich (11) und einen im wesentlichen horizontal verlaufenden Bodenbereich (12) aufweist, wobei das Grundgestell (10) ausgelegt ist, auf einem Fahrzeugsitz (2) angeordnet und dort mit einem fahrzeuginternen Sicherheitsgurtsystem gehalten zu werden; und
- einem Sitzschalensystem (20), welches eine Sitzschale (21) und ein an der Unterseite des Sitzschalensystems (20) vorgesehenes Verbindungselement (23) aufweist, wobei das Verbindungselement (23) mit einem entsprechend komplementär hierzu ausgebildeten und am Bodenbereich (12) des Grundgestells (10) vorgesehenen Verbindungselement (13) derart in Eingriff bringbar ist, daß zwischen dem Grundgestell (10) und dem Sitzschalensystem (20) eine kraftschlüssige Verbindung gebildet wird, wobei das Sitzschalensystem (20) um eine mit den Verbindungselementen (13, 23) gebildete und im Wesentlichen vertikale Drehachse (A) relativ zum Grundgestell (10) zwischen einer ersten Position, in welcher die Sitzschale (21) in Fahrtrichtung zeigt, und einer zweiten Position, in welcher die Sitzschale (21) entgegen der Fahrtrichtung zeigt, verdrehbar oder umstellbar ist, wobei
der Kindersitz (1) ferner zumindest einen Verankerungsgurt (29) aufweist, wobei das eine Ende des Verankerungsgurtes (29) am Grundgestell (10) und das andere Endes des Verankerungsgurtes (29) am Grundgestell (10) oder am Sitzschalensystem (20) befestigt ist, und wobei der Verankerungsgurt (29) mit Führungsmitteln (24) unabhängig von der Drehposition des Sitzschalensystems (20) relativ zum Grundgestell (10) derart über einen vorgegebenen ersten Führungsbereich (26) an der Rückseite des Sitzschalensystems (20) geführt wird, daß der Verankerungsgurt (29) stets um die Drehachse (A) verläuft und daß ferner beim Drehen des Sitzschalensystems (20) von der ersten Position zu der zweiten Position und umgekehrt der Verankerungsgurt (29) zumindest teilweise zwischen dem Sitzschalensystem (20) und dem Grundgestell (10) verläuft, so daß mit dem Verankerungsgurt (29) das Sitzschalensystem (20) an dem Grundgestell (10) gehalten wird, **dadurch gekennzeichnet, daß** der vorgegebene erste Führungsbereich (26) an der Rückseite des Sitzschalensystems (20) ein an dem Sitzschalensystem (20) angeordnetes Führungsglied (27) aufweist, wobei
das Führungsglied (27) eine vorzugsweise drehbar gelagerte Hülse, insbesondere Horizontalhülse, aufweist über bzw. durch welche der Verankerungsgurt (29) geführt wird.

2. Kindersitz (1) nach dem Oberbegriff des Anspruches 1,
**dadurch gekennzeichnet, daß**
der Kindersitz (1) ferner zumindest einen Verankerungsguxt (29) aufweist, der zumindest mit einem Ende am Grundgestell (10) und mit dem anderen Endes am Grundgestell (10) oder am Sitzschalensystem (20) befestigt ist, und wobei der Verankerungsgurt (29) in der zweiten Position des Sitzschalensystems (20), in welcher die Sitzschale (21) entgegen der Fahrtrichtung zeigt, im wesentlichen waagerecht verlaufend unter Zugspannung steht und somit ermöglicht, daß eine Gegenkraft zu zumindest einem Teil der an das Sitzschalensystem (20) angreifenden und in Fahrtrichtung zeigenden Kräfte von dem Sitzschalensystem (20) über den Verankerungsgurt (29) auf das Grundgestell (10) ableitet werden kann, so daß mit Hilfe des Verankerungsgurtes (29) das Sitzschalensystem (20) an dem Grundgestell (10) gehalten wird.

3. Kindersitz nach Anspruch 1 oder 2, wobei der Verankerungsgurt (29) mit zumindest einem seiner Enden am unteren oder am oberen Ende des im Wesentlichen vertikal verlaufenden Rückenbereichs (11) des Grundgestells (10) befestigt ist.

4. Kindersitz nach einem der vorhergehenden Ansprüche, wobei der Verankerungsgurt (29) eine vorab festgelegte Länge aufweist.

5. Kindersitz nach einem der vorhergehenden Ansprüche, welcher vorzugsweise am Seiten- oder Rückenbereich des Sitzschalensystems (20) ferner zumindest ein manuell betätigbares Spannmittel zum Verändern der Länge des Verankerungsgurts (29) aufweist.

6. Kindersitz nach einem der vorhergehenden Ansprüche, wobei das Führungsglied (27) eine Öse oder ein ösen-ähnliches Element aufweist, durch welches der Verankerungsgurt (29) geführt wird.

7. Kindersitz nach einem der vorhergehenden Ansprüche, wobei das Führungsglied (27) derart ausgebildet ist, daß der Verankerungsgurt (29) bei der Führung über die Hülse um 180° gedreht wird.

8. Kindersitz nach einem der vorhergehenden Ansprüche, wobei die Führungsmittel (24) ferner zumindest eine Führungsöse oder ein ösenähnliches Element aufweisen, die bzw. das mit dem Sitzschalensystem (20) fest verbunden ist.

9. Kindersitz nach einem der vorhergehenden Ansprüche, wobei die Führungsmittel (24) ferner einen von dem vorgegebenen ersten Führungsbereich (26) an der Rückseite des Sitzschalensystems (20) verschiedenen zweiten Führungsbereich (28) aufweisen, welcher sich zwischen dem Sitzschalensystem (20) und dem Grundgestell (10) erstreckt, und in welchem der Verankerungsgurt (29) bei der Drehung des Sitzschalensystems (20) von der ersten Position zu der zweiten Position und umgekehrt geführt wird.

10. Kindersitz nach Anspruch 9, wobei die Sitzschale (21) als schalenförmiges Formteil ausgebildet ist, und wobei sich der zweite Führungsbereich (28) im Wesentlichen entlang der Peripherie des Formteils erstreckt.

11. Kindersitz nach Anspruch 9, wobei das Sitzschalensystem (20) ferner einen zwischen der Sitzschale (21) und dem Grundgestell (10) angeordneten Zwischenrahmen (22) aufweist, in den die Sitzschale (21) setzbar und an dem die Sitzschale (21) mit entsprechend vorgesehenen Verankerungsmitteln vorzugsweise lösbar befestigbar ist, wobei sich der zweite Führungsbereich (28) im wesentlichen entlang der Peripherie des Zwischenrahmens (22) erstreckt.

12. Kindersitz nach Anspruch 11, wobei der Zwischenrahmen (22) derart ausgeführt ist, daß die Sitzschale (21) in verschiedenen einstellbaren Liege-/Sitzpositionen in dem Sitzschalensystem (20) befestigbar ist.

13. Kindersitz nach einem der vorhergehenden Ansprüche, wobei das an der Unterseite des Sitzschalensystems (20) vorgesehene Verbindungselement (23) und das komplementär hierzu ausgebildete und am Bodenbereich (12) des Grundgestells (10) vorgesehene Verbindungselement (13) derart ausgeführt sind, daß zwischen dem Grundgestell (10) und dem Sitzschalensystem (20) eine lösbare Verbindung gebildet wird.

14. Kindersitz nach einem der vorhergehenden Ansprüche, wobei das Sitzschalensystem (20) ferner betätigbare Arretierungsmittel aufweist, welche mit dem Sitzschalensystem (20) einerseits und dem Grundgestell (10) andererseits derart zusammenwirken, daß bei Betätigung der Arretierungsmittel eine Drehbewegung des Sitzschalensystems (20) relativ zum Grundgestell (10) verhindert wird.

15. Kindersitz nach einem der vorhergehenden Ansprüche, wobei das Grundgestell (10) ein schalenförmiges Formteil und/oder einen Rahmen aufweist.

## Claims

1. Rotatable child seat (1) for motor vehicles, having
- a base frame (10) which has a substantially vertically extending back region (11) and a substantially horizontally extending basal region (12), the base frame (10) being configured to be arranged on a vehicle seat (2) and to be held there by means of an in-vehicle safety belt system; and
- a seat shell system (20) which has a seat shell (21) and a connecting element (23) provided on the underside of the seat shell system (20), the connecting element (23) being arranged to be brought into engagement with a connecting element (13) constructed so as to be appropriately complementary thereto and provided on the basal region (12) of the base frame (10) in such a way that a force-based connection is formed between the base frame (10) and the seat shell system (20), the seat shell system (20) being rotatable or repositionable relative to the base frame (10) about a substantially vertical pivot axis (A), formed by the connecting elements (13, 23), between a first position, in which the seat shell (21) faces in the direction of travel, and a second position, in which the seat shell (21) faces in the direction opposite to the direction of travel, wherein
the child seat (1) also has at least one anchoring belt (29), one end of the anchoring belt (29) being attached to the base frame (10) and the other end of the anchoring belt (29) being attached to the base frame (10) or to the seat shell system (20), and the anchoring belt (29), independently of the rotated position of the seat shell system (20) relative to the base frame (10), being guided by guide means (24) over a predetermined first guide region (26) on the rear side of the seat shell system (20) in such a way that the anchoring belt (29) always passes around the pivot axis (A) and that on rotation of the seat shell system (20) from the first position to the second position and *vice versa* the anchoring belt (29) passes at least partly between the seat shell system (20) and the base frame (10), so that the seat shell system (20) is held against the base frame (10) by the anchoring belt (29),
**characterized in that**
the predetermined first guide region (26) on the rear side of the seat shell system (20) has, arranged on the seat shell system (20), a guide member (27), the guide member (27) having a sleeve, preferably a rotatably mounted sleeve, especially a horizontal sleeve, over or through which the anchoring belt (29) is guided.

2. Child seat (1) according to the preamble of claim 1,
**characterized in that**
the child seat (1) also has at least one anchoring belt (29) which is attached at least by one end to the base frame (10) and by the other end to the base frame (10) or to the seat shell system (20), and when the seat shell system (20) is in the second position in which the seat shell (21) faces in the direction opposite to the direction of travel, the anchoring belt (29), running substantially horizontally, is under tensile stress and accordingly makes it possible for a counter-force with respect to at least some of the forces acting on the seat shell system (20) and directed in the direction of travel to be transmitted from the seat shell system (20) by way of the anchoring belt (29) to the base frame (10), so that with the aid of the anchoring belt (29) the seat shell system (20) is held against the base frame (10).

3. Child seat according to claim 1 or 2, the anchoring belt (29) being attached by at least one of its ends to the lower end or to the upper end of the substantially vertically extending back region (11) of the base frame (10).

4. Child seat according to any one of the preceding claims, the anchoring belt (29) having a pre-established length.

5. Child seat according to any one of the preceding claims, which preferably also has on the side region or back region of the seat shell system (20) at least one manually actuatable tensioning means for changing the length of the anchoring belt (29).

6. Child seat according to any one of the preceding claims, the guide member (27) having an eyelet or an eyelet-like element through which the anchoring belt (29) is guided.

7. Child seat according to any one of the preceding claims, the guide member (27) being constructed in such a way that the anchoring belt (29), on being guided over the sleeve, is turned through 180°.

8. Child seat according to any one of the preceding claims, the guide means (24) also having at least one guide eyelet or eyelet-like element rigidly connected to the seat shell system (20).

9. Child seat according to any one of the preceding claims, the guide means (24) also having a second guide region (28), different from the predetermined first guide region (26) on the rear side of the seat shell system (20), which second guide region extends between the seat shell system (20) and the base frame (10) and in which the anchoring belt (29) is guided on rotation of the seat shell system (20) from the first position to the second position and *vice versa.*

10. Child seat according to claim 9, the seat shell (21) being in the form of a shell-shaped moulded part and the second guide region (28) extending substantially along the periphery of the moulded part.

11. Child seat according to claim 9, the seat shell system (20) also having, arranged between the seat shell (21) and the base frame (10), an intermediate frame (22) into which the seat shell (21) can be placed and to which the seat shell (21) can be attached, preferably releasably, using appropriately provided anchoring means, the second guide region (28) extending substantially along the periphery of the intermediate frame (22).

12. Child seat according to claim 11, the intermediate frame (22) being configured in such a way that the seat shell (21) can be attached in various adjustable lying/sitting positions in the seat shell system (20).

13. Child seat according to any one of the preceding claims, the connecting element (23) provided on the underside of the seat shell system (20) and the connecting element (13) constructed so as to be complementary thereto and provided on the basal region (12) of the base frame (10) being configured in such a way that a releasable connection is formed between the base frame (10) and the seat shell system (20).

14. Child seat according to any one of the preceding claims, the seat shell system (20) also having actuatable locking means which co-operate with the seat shell system (20) on the one hand and with the base frame (10) on the other hand in such a way that, on actuation of the locking means, the seat shell system (20) is prevented from performing a rotational movement relative to the base frame (10).

15. Child seat according to any one of the preceding claims, the base frame (10) having a shell-shaped moulded part and/or a frame.

## Revendications

1. Siège pour enfants rotatif (1) pour véhicules automobiles avec
- un châssis de base (10) qui présente une zone de dossier (11) s'étendant essentiellement verticalement et une zone de fond (12) s'étendant essentiellement horizontalement, le châssis de base (10) étant configuré afin d'être disposé sur un siège de véhicule (2) et maintenu sur celui-ci avec un système de ceinture de sécurité interne au véhicule ; et
- un système de coque de siège (20) qui présente une coque de siège (21) et un élément de liaison (23) prévu sur le dessous du système de coque de siège (20), l'élément de liaison (23) pouvant être amené en engagement avec un élément de liaison (13) réalisé en conséquence de manière complémentaire à celui-ci et prévu sur la zone de fond (12) du châssis de base (10) de telle sorte qu'entre le châssis de base (10) et le système de coque de siège (20) est formée une liaison par friction, le système de coque de siège (20) pouvant être pivoté ou déplacé autour d'un axe de rotation (A) essentiellement vertical et formé avec les éléments de liaison (13, 23) par rapport au châssis de base (10) entre une première position, dans laquelle la coque de siège (21) est tournée dans le sens de la marche et une seconde position, dans laquelle la coque de siège (21) est tournée dans le sens inverse de la marche,
le siège pour enfants (1) présentant de plus au moins une ceinture d'ancrage (29), une extrémité de la ceinture d'ancrage (29) étant fixée sur le châssis de base (10) et l'autre extrémité de la ceinture d'ancrage (29) sur le châssis de base (10) ou sur le système de coque de siège (20), et la ceinture d'ancrage (29) étant guidée avec des moyens de guidage (24) indépendamment de la position rotative du système de coque de siège (20) par rapport au châssis de base (10) sur une première zone de guidage (26) prescrite sur le côté arrière du système de coque de siège (20) de telle sorte que la ceinture d'ancrage (29) s'étende toujours autour de l'axe de rotation (A) et que de plus, lors de la rotation du système de coque de siège (20) de la première position à la seconde position et inversement, la ceinture d'ancrage (29) s'étende au moins en partie entre le système de coque de siège (20) et le châssis de base (10) de sorte qu'avec la ceinture d'ancrage (29), le système de coque de siège (20) soit maintenu sur le châssis de base (10), **caractérisé en ce que** la première zone de guidage (26) prescrite présente sur le côté arrière du système de coque de siège (20) un organe de guidage (27) disposé sur le système de coque de siège (20), l'organe de guidage (27) présentant une douille logée de préférence de manière rotative, en particulier une douille horizontale via ou par laquelle la ceinture d'ancrage (29) est guidée.

2. Siège pour enfants (1) selon le préambule de la revendication 1, **caractérisé en ce que** le siège pour enfants (1) présente de plus au moins une ceinture d'ancrage (29) qui est fixée au moins par une extrémité sur le châssis de base (10) et par l'autre extrémité sur le châssis de base (10) ou sur le système de coque de siège (20) et la ceinture d'ancrage (29) se trouvant sous effort de traction dans la seconde position du système de coque de siège (20), dans laquelle la coque de siège (21) est tournée dans le sens de la marche, en s'étendant essentiellement horizontalement et permettant ainsi qu'une force antagoniste puisse être dérivée pour au moins une partie des forces agissant sur le système de coque de siège (20) et dirigées dans le sens de la marche du système de coque de siège (20) via la ceinture d'ancrage (29) au châssis de base (10) de sorte qu'à l'aide de la ceinture d'ancrage (29), le système de coque de siège (20) soit maintenu sur le châssis de base (10).

3. Siège pour enfants selon la revendication 1 ou 2, la ceinture d'ancrage (29) étant fixée par au moins l'une de ses extrémités sur l'extrémité inférieure ou sur l'extrémité supérieure de la zone de dossier (11) s'étendant essentiellement verticalement du châssis de base (10).

4. Siège pour enfants selon l'une quelconque des revendications précédentes, la ceinture d'ancrage (29) présentant une longueur déterminée auparavant.

5. Siège pour enfants selon l'une quelconque des revendications précédentes, qui présente de préférence sur la zone latérale ou de dossier du système de coque de siège (20), de plus au moins un moyen de tension pouvant être actionné manuellement pour modifier la longueur de la ceinture d'ancrage (29).

6. Siège pour enfants selon l'une quelconque des revendications précédentes, l'organe de guidage (27) présentant un oeillet ou un élément semblable à un oeillet par lequel est guidée la ceinture d'ancrage (29).

7. Siège pour enfants selon l'une quelconque des revendications précédentes, l'organe de guidage (27) étant réalisé de telle sorte que la ceinture d'ancrage (29) soit pivotée lors du guidage par la douille de 180°.

8. Siège pour enfants selon l'une quelconque des revendications précédentes, les moyens de guidage (24) présentant de plus au moins un oeillet de guidage ou un élément semblable à un oeillet qui est fixement relié au système de coque de siège (20).

9. Siège pour enfants selon l'une quelconque des revendications précédentes, les moyens de guidage (24) présentant de plus une seconde zone de guidage (28) différente de la première zone de guidage (26) prescrite sur le côté arrière du système de coque de siège (20), qui s'étend entre le système de coque de siège (20) et le châssis de base (10), et dans laquelle la ceinture d'ancrage (29) est guidée lors de la rotation du système de coque de siège (20) de la première position à la seconde position et inversement.

10. Siège pour enfants selon la revendication 9, la coque de siège (21) étant réalisée comme une partie moulée en forme de cuvette et la seconde zone de guidage (28) s'étendant essentiellement le long de la périphérie de la pièce moulée.

11. Siège pour enfants selon la revendication 9, le système de coque de siège (20) présentant de plus un cadre intermédiaire (22) disposé entre la coque de siège (21) et le châssis de base (10), dans lequel la coque de siège (21) peut être placée et sur lequel la coque de siège (21) peut être fixée de préférence de manière amovible avec des moyens d'ancrage prévus en conséquence, la seconde zone de guidage (28) s'étendant essentiellement le long de la périphérie du cadre intermédiaire (22).

12. Siège pour enfants selon la revendication 11, le cadre intermédiaire (22) étant réalisé de telle sorte que la coque de siège (21) puisse être fixée dans différentes positions allongées/assises réglables dans le système de coque de siège (20).

13. Siège pour enfants selon l'une quelconque des revendications précédentes, l'élément de liaison (23) prévu sur le dessous du système de coque de siège (20) et l'élément de liaison (13) réalisé en complément de celui-ci et prévu sur la zone de fond (12) du châssis de base (10) étant réalisés de telle sorte qu'entre le châssis de base (10) et le système de coque de siège (20) soit formée une liaison amovible.

14. Siège pour enfants selon l'une quelconque des revendications précédentes, le système de coque de siège (20) présentant de plus des moyens de blocage pouvant être actionnés qui coopèrent avec le système de coque de siège (20) d'une part et le châssis de base (10) d'autre part de telle sorte que lors de l'actionnement des moyens de blocage, un mouvement de rotation du système de coque de siège (20) soit empêché par rapport au châssis de base (10).

15. Siège pour enfants selon l'une quelconque des revendications précédentes, le châssis de base (10) présentant une pièce moulée en forme de cuvette et/ou un cadre.
